# EUROPEAN PATENT SPECIFICATION

(11) **EP 3 895 379 B1**
(45) Date of publication and mention of the grant of the patent: **13.08.2025**
(21) Application number: 19895327.5
(22) Date of filing: 16.11.2019
(51) Int. Cl.: H04L 41/5025, G06F 11/30, G06F 11/34, H04L 41/5009, H04L 41/50, G06F 11/20, H04L 41/40, H04L 45/02, H04L 43/024

(54) **ORCHESTRATION OF ACTIVITIES OF ENTITIES OPERATING IN A NETWORK CLOUD**
BESTIMMUNG VON AKTIVITÄTEN VON IN EINER NETZWERKWOLKE ARBEITENDEN EINHEITEN
ORCHESTRATION DES ACTIVITÉS D'ENTITÉS FONCTIONNANT DANS UN NUAGE DE RÉSEAU

(30) Priority: 13.12.2018 US 201862778897 P
(43) Date of publication of application: 20.10.2021
(73) Proprietor: Drivenets Ltd., 4366411 Raanana (IL)
(72) Inventor: FEDIDA, Eli, 2017600 Avtalion (IL); KRAYDEN, Amir, Hertzelia (IL); ZOLKOVER, Gal, 3457406 Haifa (IL)
(74) Representative: Grünecker Patent- und Rechtsanwälte PartG mbB
(86) International application number: PCT/IL2019/051247
(87) International publication number: WO 2020/121293

(56) References cited:
- EP-A1- 2 568 383
- GB-A- 2 481 719
- US-A1- 2003 046 426
- US-A1- 2013 007 265
- US-A1- 2014 031 006
- US-A1- 2016 212 012
- US-A1- 2017 134 237
- US-A1- 2017 163 508
- US-A1- 2018 152 958
- US-A1- 2018 324 281
- US-B1- 6 765 864

## Description

### TECHNICAL FIELD

The present disclosure relates generally to the field of networking, and in particular, to the management of a plurality of forwarding network nodes such as routers and switches in a network cloud.

### GLOSSARY

AI - Artificial Intelligence
ACL - Access Control List
BW - Bandwidth
BOM - Bill Of Materials
DDOS - Distributed Denial of Service
KPI - Key Performance Indicators
NC - Network Cloud
NCC - Network Cloud Controller
NCF - Network Cloud Fabric
NCM - Network Cloud Management
NCP - Network Cloud Packet Forwarder
NOS - Network Operating System.
NCC - Network Cloud Controller
NE - Network Element
NS - Network Switch
ODM - Original Design Manufacturer
VRF - virtual routing and forwarding
VPN - Virtual Private Network
SDN - Software Defined Network
NFV - Network Functions Virtualization
VNF - Virtual Network Function

### BACKGROUND

The term Network Cloud (NC) refers to a cloud that is being used for serving network functionalities such as routing, switching, etc. In other words, it refers to a concept of disaggregating network entities hardware and software. The control plan of a network entity is decoupled from its data-path, and is installed on a local server or in a network cloud. An underlying abstraction layer separates the control element and makes it agnostic to the data-path related hardware components. The data-path runs on a distributed hardware resources such as servers, network interfaces and white box devices and may be programmed directly.

Network cloud concept uses cloud methodology to serve Software Defined Network ("SDN") services such as routing, switching, VPN, QOS, DDOS mitigation and the like in a more efficient, centrally controlled and easily programmable way.

The separation that nowadays exists between software and hardware in the networking field, has resulted in a new model of a network cloud, wherein an optimized usage of hardware resources is implemented to enable deploying of a distributed network operating system.

Nowadays, network operators are facing a financial problem as the network elements' prices are relatively high per device and consequently the price is high on a "per port" basis, whereas the income per subscriber remains mostly constant and, in some cases, has even declined. Obviously, this affects the profitability of network owners and encourages them to look for ways to implement a cost reduction approach. Many network operators and large network owners, such as web-scale owners, have adopted the approach of implementing white-boxes in their networks, where a white-box is a hardware element that is manufactured by silicon ODMs (commodity chipsets sellers). This approach allows network operators to use different white boxes manufactured by different manufacturers, within the same distributed network cloud cluster and thereby to reduce the hardware price to a model of BOM cost plus an agreed-upon margin. Yet, this approach is rather different from the traditional approach, whereby network elements were purchased as a monolithic device of hardware and software combined together. As was mentioned above, the hardware part of the problem (i.e. the hardware part of the network elements) was solved by adopting the white-box approach. Still, the adoption of this approach has created new challenges for the software part of the problem. Since this approach involves multiple software modules and containers, the use of distributed hardware nodes solution which comprises a plurality of hardware white-boxes, requires the software modules and containers to run in synchronization.

When this concept is adopted, different functionalities may be distributed between hardware resources as they can function along the data-path while allowing packet processing. Alternatively, they can function as fabric entities allowing communication between data-path elements, or as network controllers handling routing protocols or while carrying out any other applicable functionality.

Enterprises, as well as communication service providers, who implement a virtualized network cloud, are facing new challenges that relate to the installation, deployment, configuration, orchestration, provisioning and monitoring of the plurality of different entities required in the lifecycle management of the cluster, whether these entities are network cloud routers, switches or any other applicable network element.

Additionally, as the complexity of the distributed network cloud increases, there is an increasing need to enable automatic processes for adding, removing or replacing hardware devices within the network.

US2018152958A1 discloses A radio communication network includes: a network orchestration entity, configured to orchestrate a plurality of network resources to set up at least one logical network of a plurality of logical networks based on a logical network-specific service level agreement.

US2018324281A1 discloses techniques that are described for extending a two-way active measurement protocol (TWAMP) to enable measurement of service key performance indicators (KPIs) in a software defined network (SDN) and network function virtualization (NFV) architecture. The TWAMP extensions enable control messaging to be handled by a TWAMP control client executed on a centralized controller, and data messaging to be handled by a TWAMP session initiator executed on a separate network device.

US2017134237A1 discloses a virtual machine server clusters are managed using self-healing and dynamic optimization to achieve closed-loop automation. The technique uses adaptive thresholding to develop actionable quality metrics for benchmarking and anomaly detection.

Therefore, there is a need for an orchestration model which may be configured for managing a plurality of routing or switching entities in a network cloud. The present invention seeks to fulfill this need.

### SUMMARY

It is an object to provide a novel solution for managing a plurality of routing and/or switching entities operating in a network cloud.

It is another object to provide a communication system and a method for managing distributed network nodes operating in a network cloud, based on information related to key performance indicators (KPIs) collected from the plurality of physical network elements.

It is another object to provide a communication system and a method for managing distributed network nodes based on threshold values associated with KPIs and the information collected from a plurality of physical network elements.

Other objects of the present disclosure will become apparent from the following description.

The invention is defined by the appended claims.

According to a first example there is provided a communication system according to independent claim 1.

The terms "physical network element" or "physical network node" or "hardware network element" or "network element", as the case may be, are used interchangeably herein throughout the specification and claims to denote a physical entity such as a packet processor, a CPU, a memory, a network interface, and the like, that can act as a single or multiple entities being a part of a virtual routing entity and supports the routing functionality of the latter.

The term "network cloud", as used herein throughout the specification and claims, refers to a cloud that is being used for serving network functionalities such as routing, switching, etc.

On the other hand, the term "cloud network" denotes network resources (servers, disks, CPUs, and the like) that are used for providing a cloud functionality (e.g. for hosting services, files, sites, and the like), as web scale companies do.

The terms "cloud orchestrator" or "orchestrator" as used herein throughout the specification and claims refer to a cloud management platform that automates provisioning of cloud services using policy-based tools. It enables the user to configure, provision, integrate service management-and add management, monitoring, back-up and security-in a short period of time. The platform comprises a collection of customized individual activities that are specific to a product or technology, so that the activities to be performed thereby are integrated with that product. The cloud orchestrator is typically able of guiding information, providing redundancy, availability, low latency and total transparency among the different communication protocols while offering security, management and capacity to integrate a large number of network elements, and to enable aggregating new members to a network cloud in a fast and secured manner.

By yet another embodiment, the cloud orchestrator is operative to configure a communication channel for conveying messages exchanged between network elements that are members of a cluster, and/or between network elements that are members of the cluster and the cloud orchestrator. Preferably, these messages comprise at least one type of messages being a member of a group that comprises: keepalive messages, configuration commands forwarded from the cloud orchestrator to modules installed at network elements, messages that are sent every pre-determined time interval to the cloud orchestrator and comprise information that relate to at least one of: current telemetry, statistics, events, KPIs, and the like.

In accordance with another aspect of the present disclosure there is provided a method for use in a network cloud, according to independent claim 4.

By still another embodiment, the method further comprising a step of establishing a communication channel for conveying messages exchanged between network elements that are members of the cluster, and/or between network elements that are members of the cluster and the cloud orchestrator.

According to another example the messages comprise at least one type of messages being a member of a group that consists of: keepalive messages, configuration commands forwarded from the cloud orchestrator to modules installed at network elements, messages that are sent every pre-determined time interval to the cloud orchestrator and comprise information that relate to at least one of: current telemetry, statistics, events and KPIs.

### BRIEF DESCRIPTION OF THE DRAWINGS

The accompanying drawings, which are incorporated herein and constitute a part of this specification, illustrate several embodiments of the disclosure and, together with the description, serve to explain the principles of the embodiments disclosed herein.
**Fig 1****.** illustrates a network cloud construed in accordance with an embodiment of the present invention;
**Fig 2****.** demonstrates a schematic block diagram of steps comprised at the stage of configuring a new network element when the latter is added to a network cloud, construed in accordance with an embodiment of the present invention;
**Fig 3****.** depicts a schematic block diagram comprising steps included at the stage of executing a task by a network element in a network cloud, construed in accordance with an embodiment of the present invention; and
**Fig 4****.** illustrates a schematic block diagram of steps comprised at the stage of traffic analysis and automatic execution of actions associated with network elements that belong to a network cloud, construed in accordance with an embodiment of the present invention.

### DESCRIPTION OF EXEMPLARY EMBODIMENTS

Some of the specific details and values in the following detailed description refer to certain examples of the disclosure. However, this description is provided only by way of example and is not intended to limit the scope of the invention in any way. As will be appreciated by those skilled in the art, the claimed method and device may be implemented by using other methods and/or other devices that are known in the art *per se.* In addition, the described embodiments comprise different steps, not all of which are required in all embodiments of the invention. The scope of the invention is defined in the appended claims.

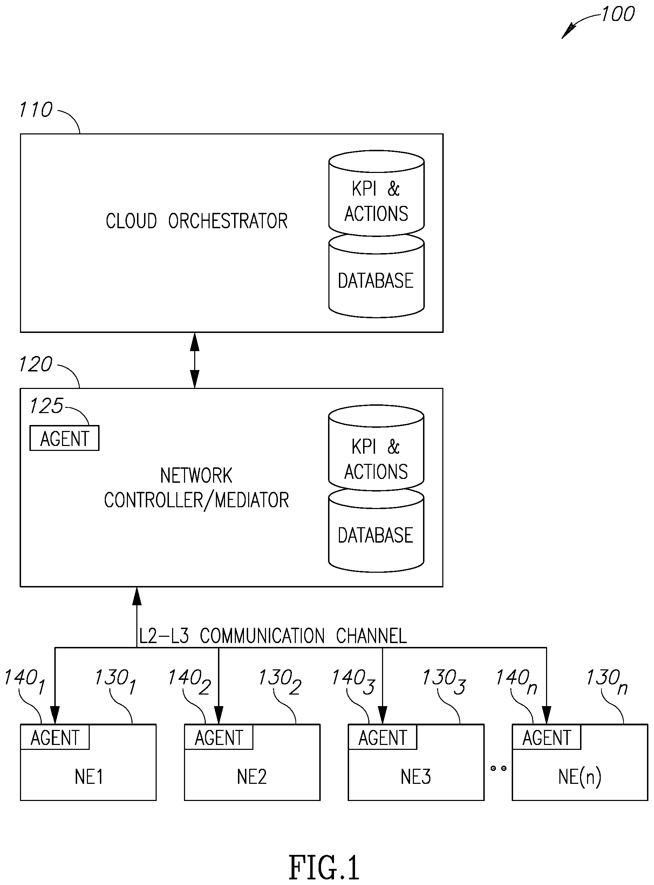

FIG. 1 illustrates a network cloud (100) construed in accordance with an embodiment of the present invention. The network cloud (100) comprises a cloud orchestrator (110) that includes a storage for KPIs and actions and a database being in two-ways communication with cloud controller 120 (e.g. mediator), comprising a storage for KPIs, actions and a database, and wherein network cloud (100) further comprises a plurality of network elements (NEs) 130₁ to 130_{N}, each comprising a respective agent 140₁ to 140_{N}, and wherein these agents are configured to communicate with cloud controller 120 over a L2/L3 communication channel.

A cloud orchestrator automates the management, coordination and organization of complicated computer systems, services and middleware. In addition to a reduced requirement for personnel involvement, the orchestration functionality eliminates the potential errors that might be introduced while carrying out provisioning, scaling or other cloud processes.

Once an operating system (OS) is installed at the cloud orchestrator 110 (and at the network controller 120, if the latter is deployed), agents 140₁ to 140_{N} may be installed at NEs 130₁ to 130_{N} to support communication from cloud orchestrator 110 either directly or through cloud controller 120. Once these agents have been installed, links are established at the L2 layer and respective tunnels may be configured, thereby enabling a two-ways communication between the cloud orchestrator and the network elements.

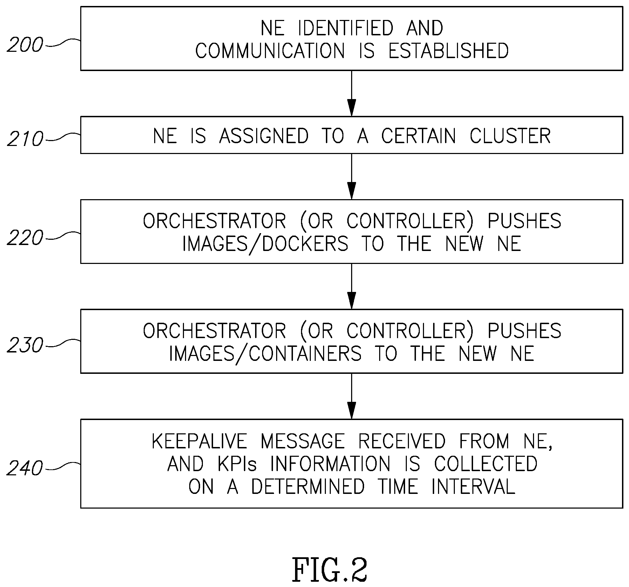

FIGs. 2 to 4 demonstrate various steps included in three different operational stages of a method by which the network cloud referred to hereinabove, operates.

FIG. 2 demonstrates a schematic block diagram of steps comprised at the stage of configuring a new network element when added to a network cloud, construed in accordance with an embodiment of the present invention.

First, the newly added network element, being for example a router or a switch, is identified and a communication link is established between the cloud orchestrator and that new NE (step 200). The NE is then associated by the managing entity with a certain cluster (step 210) and the cloud orchestrator or the cloud controller, as the case may be, forwards images/dockers to the new NE (step 230). Once a keepalive message is sent by the NE to the cloud orchestrator/controller, checking/confirming that the communication link that has been established between the two is operative, a plurality of KPIs will be collected and stored at the cloud orchestrator, preferably at pre-configurable time intervals (step 240).

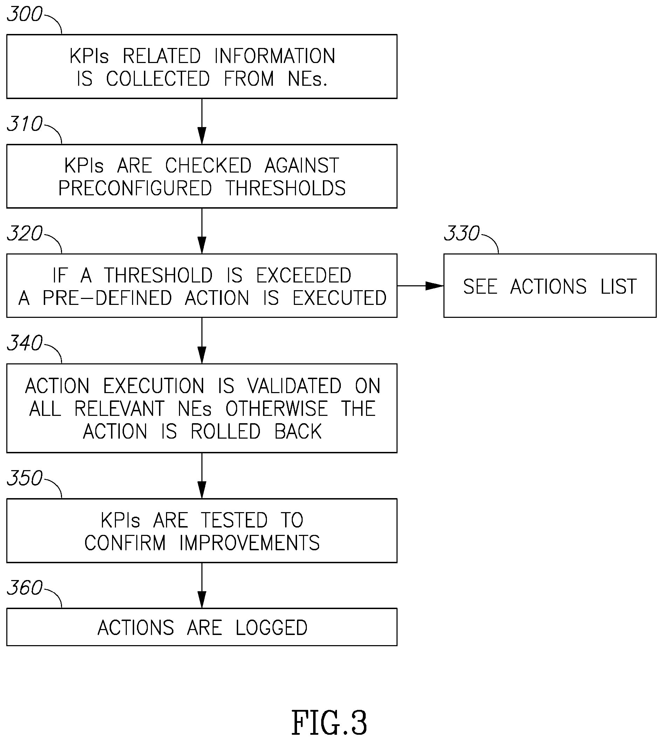

The next stage is exemplified in FIG. 3, which presents a schematic block diagram of steps included at the stage of task execution by the newly added network element. This example comprises the following steps. First, lists of KPIs are collected from the NEs that communicate (directly or indirectly) with the cloud orchestrator (step 300). The KPIs are compared with pre-defined respective threshold values (step 310) and if a certain KPI reaches its respective threshold value, a pre-defined action will be initiated (step 320) after retrieving the required action details from the database located at the cloud orchestrator (step 330). Preferably, once the cloud orchestrator has executed the required action, it confirms by checking with all NEs that are relevant to the action taken, that indeed the action had an effect on these NEs (step 340). Once the confirmation is obtained, the cloud orchestrator receives new KPIs (at least from these relevant NEs) to verify whether an improvement has occurred in their operation (step 350). After verifying that improvements have been achieved at the NEs, the action is logged at the cloud orchestrator storage (step 360).

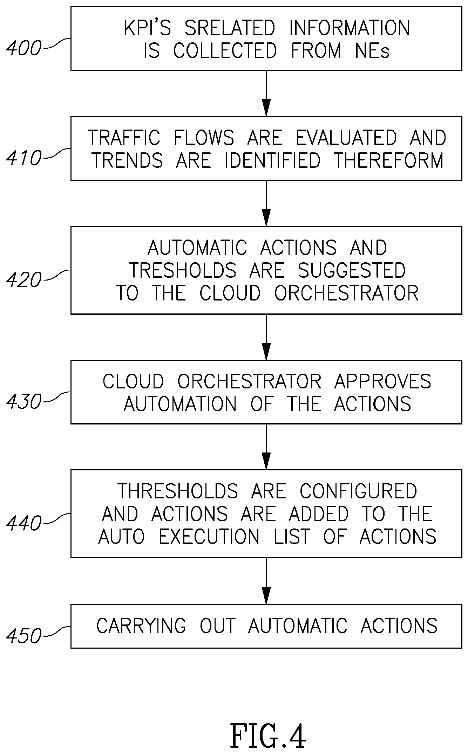

Another phase of the network cloud operation is exemplified in FIG. 4, which illustrates a schematic block diagram of an embodiment of the present disclosure of carrying out traffic analysis and automatic execution of actions associated with network elements that belong to the network cloud.

This phase starts by retrieving KPIs collected from different NEs (step 400). Then, the cloud orchestrator analyzes the traffic flows that are conveyed via these NEs and identifies traffic trends (such as future possible congestion, etc.) based on these traffic flows that were analyzed (step 410). In view of the identified trends, one or more automatic actions and their associated threshold values are suggested to be carried out in the network cloud (step 420), in order to adequately act on the scenarios predicted based on the trends identified in step 410. Once the changes (the new automated actions) are approved (step 430) the new actions and their respective threshold values are added to the cloud orchestrator storage for automatic execution thereof (step 440), and upon occurrence of situations at which the need for the new actions were added arises, the actions will be executed automatically (step 450).

When a configuration change to a network element (e.g. a node) or a plurality of nodes is required, the cloud orchestrator (acting as an administrator) may define a configuration patch (e.g. certain configuration lines or scripts) and set a list of one or more threshold values that will trigger that configuration change. The cloud orchestrator triggers the required configuration change when threshold values are exceeded, logs the executed changes and allows rollbacks. The system may execute actions in response to threshold values being exceeded, and machine learning (Artificial Intelligence) actions can be carried for configuration, administration and/or orchestration types of activities. Such actions may be for example one of the following actions:
a. Install and add a NE to a cluster;
b. Drop a NE from a cluster;
c. Shut down interfaces (or the whole NCP) for reducing power consumption
d. Apply a configuration patch to a NE or to a Network Switch;
e. Apply a configuration patch to one or more controllers;
f. Add and remove communication tunnels;
g. Change communication tunnel BW;
h. Reroute to a Distributed Denial of Service (DDoS) scrubber;
i. Apply dynamically rules for an ACL;
j. Establish ACLs dynamically;
k. Determine routes and routing policies on a dynamic basis;
l. Apply and configure VRFs; and
m. Apply quality of service to communications being conveyed via network interfaces.

During operation, periodic calculations may be carried out using recently retrieved KPIs in order to identify trends in the network cloud operation. A machine learning algorithm may be used to generate hourly and/or daily and/or weekly trends, which may then be displayed visually to the network operator.

Furthermore, based on the calculated trends, predictions can be made and be then translated into relevant threshold values. The threshold values may be saved in a thresholds database which is comprised in this example within the cloud orchestrator, so that an event manager (part of the functionality carried out by the cloud orchestrator server) may trigger events upon exceeding these relevant threshold values.

In addition, a list of required or recommended actions may be generated based on the analysis of the collected information and the calculated predictions, and the managing entity of the cloud orchestrator (an administrator) may be used to determine whether a certain action should be executed, or whether to avoid preforming a certain action, or whether to automate a certain action, so that when applicable, that action will be carried out automatically.

Moreover, monitoring of failures may be carried out according to the following embodiment:
A) The node (a network element) as well as the generated KPIs associated with that node, are monitored at a pre-defined steady rate. However, once the system detects that a malfunction is about to occur, a detection window is opened, wherein this window is opened for a certain (e.g. pre-defined) time period, during which relevant KPIs are sampled at a rate higher than the steady rate applied before that window was opened, thereby enabling to detect the cause for the possible malfunction.
B) When monitoring the node (network element) as well as the generated KPIs associated with that node at a steady state, the monitoring system may apply a new-wave of streaming telemetry protocols (for example gRPC/gNMI), having a policy based KPI collection mechanism, where priority is assigned to each KPI that allows collecting values of more significant KPIs at higher rate, and such a KPI will receive a better QoS treatment in order to ensure that updates of the significant KPI values are properly received.
C) The monitoring system may also use KPI values collected in order to build a data-set for analyzing normal and abnormal KPI behaviors (in terms of statistical behavior, such as distribution, mean, standard deviation, bias, and the like.)

Other embodiments of the invention will be apparent to those skilled in the art from consideration of the specification and practice of the invention disclosed herein. It is intended that the specification and examples be considered as exemplary only, with a scope of the invention being defined in the appended independent claims and wherein advantageous features are set out in the dependent claims.

## Claims

1. A communication system (100) configured to operate in a network cloud, the system comprising
a plurality of physical network elements (130₁ ....130ₙ) and a server;
wherein said communication system is **characterized in that**
each of the plurality of physical network elements (130₁ .... 130ₙ) comprises a respective agent (140, ... 140ₙ) that enables communications between said agent (140₁ .... 140ₙ) and a server configured to operate as a cloud orchestrator (110), wherein said respective agents (140₁ .... 140ₙ) are used to establish links at an L2 layer that enable a two-ways communication between said cloud orchestrator (110) and a respective physical network element (130₁ .... 130ₙ), and
wherein said cloud orchestrator (110) is further configured to receive information related to key performance indicators, KPIs, collected (300) from each of said plurality of physical network elements (130₁ ....130ₙ) along a respective established link, and upon determining
that a pre-defined action that relates to a respective physical network element needs to be executed (320), based on one or more threshold values stored at said cloud orchestrator and associated with said KPIs and the information collected from the plurality of physical network elements, triggering a configuration change at said respective physical network element.

2. The communication system of claim 1, wherein said cloud orchestrator is operative to configure a communication channel for conveying messages exchanged between physical network elements that are members of a cluster comprising said plurality of physical network elements, and/or between physical network elements that are members of said cluster and the cloud orchestrator.

3. The communication system of claim 2, wherein said messages comprise at least one type of messages being a member of a group that consists of: keepalive messages, configuration commands forwarded from said cloud orchestrator to modules installed at physical network elements, messages that are sent every pre-determined time interval to said cloud orchestrator and comprise information that relate to at least one of: current telemetry, statistics, events and KPIs.

4. A method for use in a network cloud, which comprises
a plurality of physical network elements, each comprising a respective agent (140₁ .... 140ₙ) that enables communications between said agent (140₁ .... 140ₙ) and a server configured to operate as a cloud orchestrator (110);
wherein said respective agents (140₁ .... 140ₙ) are used to establish links at an L2 layer that enable a two-ways communication between said cloud orchestrator (110) and a respective physical network element (130₁ .... 130ₙ),
wherein said method comprises the steps of:
(i) identifying a newly added physical network element to said communication system;
(ii) establishing a communication link at an L2 layer between said cloud orchestrator and said newly added physical network element (200),
wherein said L2 layer link enables a two-ways communication between said cloud orchestrator (110) and said newly added physical network element;
(iii) forwarding by said cloud orchestrator images/dockers to the newly added physical network element (230);
(iv) once a keepalive message is sent by the newly added physical network element to the cloud orchestrator, checking/confirming that the communication link that has been established between the two is operative, and if in the affirmative, a plurality of KPIs is collected from the newly added physical network element (240) along said L2 layer link, and stored at the cloud orchestrator;
v) upon determining that a pre-defined action that relates to said newly added physical network element needs to be executed (320), based on one or more threshold values stored at said cloud orchestrator and associated with said KPIs and the information collected from the newly added physical network element, triggering a configuration change at said newly added physical network element.

5. The method of claim 4, further comprising a step of establishing a communication channel for conveying messages exchanged between physical network elements that are members of a cluster comprising said plurality of physical network elements, and/or between physical network elements that are members of said cluster and the cloud orchestrator.

6. The method of claim 5, wherein said messages comprise at least one type of messages being a member of a group that consists of: keepalive messages, configuration commands forwarded from said cloud orchestrator to modules installed at physical network elements, messages that are sent every pre-determined time interval to said cloud orchestrator and comprise information that relate to at least one of: current telemetry, statistics, events and KPIs.

7. The method of one of claims 4-6, further comprising a step of ensuring that a plurality of physical network elements operate as a single virtual routing entity.

8. The method of one of claims 4-7, further comprising a step of monitoring at least one physical network element and KPIs associated therewith at a pre-defined steady rate, and upon detecting that a malfunction is about to be associated with said physical network element, determining a time period during which relevant KPIs will be sampled at higher rate than the steady rate applied prior to making said determination.

## Patentansprüche

1. Ein Kommunikationssystem (100), das so konfiguriert ist, dass es in einer Netzwerkcloud arbeitet, wobei das System Folgendes umfasst
eine Vielzahl von physischen Netzwerkelementen (130₁ ....130ₙ) und einen Server;
wobei das Kommunikationssystem **dadurch gekennzeichnet ist, dass**
jedes der mehreren physischen Netzwerkelemente (130₁ ....130ₙ) umfasst einen jeweiligen Agenten (140₁ ... 140ₙ), der die Kommunikation zwischen dem Agenten (140₁ ... 140ₙ) und einem Server ermöglicht, der so konfiguriert ist, dass er als Cloud-Koordinator (110) arbeitet, wobei die jeweiligen Agenten (140₁ ...140ₙ) verwendet werden, um Verbindungen auf einer L2-Schicht herzustellen, die eine bidirektionale Kommunikation zwischen dem Cloud-Koordinator (110) und einem jeweiligen physischen Netzwerkelement (130₁ .... 130ₙ) ermöglichen, und
wobei der Cloud-Koordinator (110) ferner so konfiguriert ist, dass er Informationen empfängt, die sich auf wesentliche Leistungsindikatoren, KPIs, beziehen, die von jedem der mehreren physischen Netzelemente (130₁ ....130ₙ) entlang einer jeweiligen hergestellten Verbindung gesammelt wurden (300), und dass er bei der Feststellung, dass eine vordefinierte Aktion, die sich auf ein jeweiliges physisches Netzelement bezieht, ausgeführt werden muss (320), auf der Grundlage eines oder mehrerer Schwellenwerte, die in dem Cloud- Koordinator gespeichert sind und mit den KPIs und den von den mehreren physischen Netzelementen gesammelten Informationen verknüpft sind, eine Konfigurationsänderung an dem jeweiligen physischen Netzelement auslöst.

2. Kommunikationssystem nach Anspruch 1, wobei der Cloud-Koordinator einen Kommunikationskanal zur Übermittlung von Nachrichten konfigurieren kann, die zwischen physischen Netzwerkelementen, die Mitglieder eines Clusters sind, der die Vielzahl physischer Netzwerkelemente umfasst, und/oder zwischen physischen Netzwerkelementen, die Mitglieder des Clusters sind, und dem Cloud- Koordinator ausgetauscht werden.

3. Kommunikationssystem nach Anspruch 2, wobei die Nachrichten mindestens einen Nachrichtentyp umfassen, der zu einer Gruppe gehört, die aus folgenden Elementen besteht: Keepalive-Nachrichten, Konfigurationsbefehle, die von dem Cloud- Koordinator an Module weitergeleitet werden, die an physischen Netzelementen installiert sind, Nachrichten, die in jedem vorbestimmten Zeitintervall an den Cloud-Koordinator gesendet werden und Informationen umfassen, die sich auf mindestens eines der folgenden Elemente beziehen: aktuelle Telemetrie, Statistiken, Ereignisse und KPls.

4. Ein Verfahren zur Verwendung in einer Netzwerkcloud, das Folgendes umfasst
eine Vielzahl von physischen Netzwerkelementen, von denen jedes einen entsprechenden Agenten (140₁ .... 140ₙ), der die Kommunikation zwischen dem Agenten (140₁ .... 140ₙ) und einem Server ermöglicht, der so konfiguriert ist, dass er als Cloud-Koordinator (110) arbeitet;
wobei die jeweiligen Agenten (140₁.... 140ₙ) verwendet werden, um Verbindungen auf einer L2-Schicht herzustellen, die eine bidirektionale Kommunikation zwischen dem Cloud-Koordinator (110) und einem jeweiligen physischen Netzwerkelement (130₁.... 130ₙ) ermöglichen,
wobei das Verfahren die folgenden Schritte umfasst:
(i) Identifizieren eines neu hinzugefügten physikalischen Netzelements des Kommunikationssystems;
(ii) Herstellen einer Kommunikationsverbindung auf einer L2-Schicht zwischen dem Cloud-Koordinator und dem neu hinzugefügten physischen Netzelement (200),
wobei die L2-Schichtverbindung eine bidirektionale Kommunikation zwischen dem Cloud-Koordinator (110) und dem neu hinzugefügten physischen Netzelement ermöglicht;
(iii) Weiterleiten von Bildern/Dockern des Cloud-Koordinator an das neu hinzugefügte physische Netzelement (230);
(iv) sobald eine Keepalive-Nachricht von dem neu hinzugefügten physischen Netzelement an den Cloud-Koordinator gesendet wird, Überprüfen/Bestätigen, dass die Kommunikationsverbindung, die zwischen den beiden hergestellt wurde, funktionsfähig ist, und wenn dies bejaht wird, wird eine Vielzahl von KPIs von dem neu hinzugefügten physischen Netzelement (240) entlang der L2-Schichtverbindung gesammelt und beim Cloud-Koordinator gespeichert;
v) beim Feststellen, dass eine vordefinierte Aktion, die sich auf das neu hinzugefügte physische Netzelement bezieht, ausgeführt werden muss (320), basierend auf einem oder mehreren Schwellenwerten, die in dem Cloud-Koordinator gespeichert und mit den KPIs und den von dem neu hinzugefügten physischen Netzelement gesammelten Informationen verknüpft sind, Auslösen einer Konfigurationsänderung an dem neu hinzugefügten physischen Netzelement.

5. Das Verfahren nach Anspruch 4 umfasst ferner einen Schritt des Herstellenss eines Kommunikationskanals zur Übermittlung von Nachrichten, die zwischen physischen Netzwerkelementen, die Mitglieder eines Clusters sind, der die Vielzahl physischer Netzwerkelemente umfasst, und/oder zwischen physischen Netzwerkelementen, die Mitglieder des Clusters sind, und dem Cloud-Koordinator ausgetauscht werden.

6. Verfahren nach Anspruch 5, wobei die Nachrichten mindestens einen Nachrichtentyp umfassen, der zu einer Gruppe gehört, die besteht aus: Keepalive-Nachrichten, Konfigurationsbefehlen, die von dem Cloud-Koordinator an Module weitergeleitet werden, die an physischen Netzelementen installiert sind, Nachrichten, die in jedem vorbestimmten Zeitintervall an den Cloud-Koordinator gesendet werden und Informationen umfassen, die sich auf mindestens eines der folgenden Elemente beziehen: aktuelle Telemetrie, Statistiken, Ereignisse und KPls.

7. Verfahren nach einem der Ansprüche 4 bis 6, das ferner einen Schritt umfasst, mit dem sichergestellt wird, dass mehrere physische Netzwerkelemente als eine einzige virtuelle Routing-Einheit arbeiten.

8. Verfahren nach einem der Ansprüche 4 bis 7, das ferner einen Schritt umfasst, bei dem mindestens ein physisches Netzelement und damit verknüpfte KPIs mit einer vordefinierten konstanten Rate überwacht werden und beim Feststellen, dass eine Fehlfunktion im Begriff ist, mit dem physischen Netzelement in Verbindung gebracht zu werden, Bestimmen einer Zeitspanne, während der relevante KPIs mit einer höheren Rate abgetastet werden als die konstante Rate, die vor dem Feststellen angewendet wurde.

## Revendications

1. Système de communication (100) configuré pour fonctionner dans un nuage de réseau, le système comportant
une pluralité d'éléments de réseau physique (130₁ .... 130ₙ) et un serveur ;
où ledit système de communication est **caractérisé en ce que**
chacun de la pluralité d'éléments de réseau physique (130₁ .... 130ₙ) comporte un agent respectif (140₁ .... 140ₙ) qui permet des communications entre ledit agent (140₁ .... 140ₙ) et un serveur configuré pour fonctionner comme un orchestrateur de nuage (110), où lesdits agents respectifs (140₁ .... 140ₙ) sont utilisés pour établir des liens au niveau d'une couche L2 qui permettent une communication bidirectionnelle entre ledit orchestrateur de nuage (110) et un élément de réseau physique respectif (130₁ .... 130ₙ) et
où ledit orchestrateur de nuage (110) est en outre configuré pour recevoir des informations concernant des indicateurs clés de performance, KPIs, collectées (300) auprès de chacun de ladite pluralité d'éléments de réseau physique (130₁ .... 130ₙ) le long d'un lien établi respectif, et sur détermination qu'une action prédéfinie qui concerne un élément de réseau physique respectif doit être exécutée (320), sur la base d'une ou plusieurs valeurs seuil stockées au niveau dudit orchestrateur de nuage et associées auxdits KPIs et aux informations collectées auprès de la pluralité d'éléments de réseau physique, déclencher un changement de configuration au niveau dudit élément de réseau physique respectif.

2. Système de communication de la revendication 1, où ledit orchestrateur de nuage fonctionne pour configurer un canal de communication pour acheminer des messages échangés entre des éléments de réseau physique qui sont membres d'un cluster comportant ladite pluralité d'éléments de réseau physique, et/ou entre des éléments de réseau physique qui sont membres dudit cluster et l'orchestrateur de nuage.

3. Système de communication de la revendication 2, où lesdits messages comportent au moins un type de messages faisant partie d'un groupe comprenant : des messages keepalive, des commandes de configuration transmises par ledit orchestrateur de nuage à des modules installés au niveau d'éléments de réseau physique, des messages qui sont envoyés à chaque intervalle de temps prédéterminé audit orchestrateur de nuage et comportent des informations qui concernent au moins l'un des éléments suivant : une télémétrie actuelle, des statistiques, des événements et des KPIs.

4. Procédé destiné à être utilisé dans un nuage de réseau, qui comporte
une pluralité d'éléments de réseau physique, chacun comprenant un agent respectif (140₁ .... 140ₙ) qui permet des communications entre ledit agent (140₁ .... 140ₙ) et un serveur configuré pour fonctionner en tant qu'orchestrateur de nuage (110) ;
où lesdits agents respectifs (140₁ .... 140ₙ) sont utilisés pour établir des liens au niveau d'une couche L2 qui permettent une communication bidirectionnelle entre ledit orchestrateur de nuage (110) et un élément de réseau physique respectif (130₁ .... 130ₙ),
où ledit procédé comporte les étapes consistant à :
(i) identifier un élément de réseau physique nouvellement ajouté audit système de communication ;
(ii) établir un lien de communication au niveau d'une couche L2 entre ledit orchestrateur de nuage et ledit élément de réseau physique nouvellement ajouté (200),
où ledit lien de couche L2 permet une communication bidirectionnelle entre ledit orchestrateur de nuage (110) et ledit élément de réseau physique nouvellement ajouté ;
(iii) transmettre par ledit orchestrateur de nuage des images/dockers à l'élément de réseau physique nouvellement ajouté (230) ;
(iv) une fois qu'un message keepalive est envoyé par l'élément de réseau physique nouvellement ajouté à l'orchestrateur de nuage, vérifier/confirmer que le lien de communication qui a été établi entre les deux est opérationnel, et dans l'affirmative, une pluralité de KPIs est collectée auprès de l'élément de réseau physique nouvellement ajouté (240) le long dudit lien de couche L2, et stockée au niveau de l'orchestrateur de nuage ;
(v) sur détermination qu'une action prédéfinie qui concerne ledit élément de réseau physique nouvellement ajouté doit être exécutée (320), sur la base d'une ou plusieurs valeurs seuil stockées au niveau dudit orchestrateur en nuage et associées audits KPIs et aux informations collectées auprès de l'élément de réseau physique nouvellement ajouté, déclencher un changement de configuration au niveau dudit élément de réseau physique nouvellement ajouté.

5. Procédé de la revendication 4, comportant en outre une étape consistant à établir un canal de communication pour acheminer des messages échangés entre des éléments de réseau physique qui sont membres d'un cluster comportant ladite pluralité d'éléments de réseau physique, et/ou entre des éléments de réseau physique qui sont membres dudit cluster et l'orchestrateur en nuage.

6. Procédé de la revendication 5, où lesdits messages comportent au moins un type de messages faisant partie d'un groupe comprenant : des messages keepalive, des commandes de configuration transmises par ledit orchestrateur de nuage à des modules installés au niveau d'éléments de réseau physique, des messages qui sont envoyés à chaque intervalle de temps prédéterminé audit orchestrateur de nuage et comportent des informations qui concernent au moins l'un des éléments suivants : une télémétrie actuelle, des statistiques, des événements et des KPIs.

7. Procédé de l'une des revendications 4 à 6, comportant en outre une étape consistant à s'assurer qu'une pluralité d'éléments de réseau physique fonctionnent comme une seule entité de routage virtuelle.

8. Procédé de l'une des revendications 4 à 7, comportant en outre une étape consistant à surveiller au moins un élément de réseau physique et des KPIs qui lui sont associés à un rythme régulier prédéfini et, sur détection qu'un dysfonctionnement est sur le point d'être associé à audit élément de réseau physique, à déterminer une période de temps pendant laquelle des KPIs concernés seront échantillonnés à un rythme plus élevé que le rythme régulier appliqué avant ladite détermination.
